# FASCICULE DE BREVET EUROPEEN

(11) **EP 4 214 381 B1**
(45) Date de publication et mention de la délivrance du brevet: **24.07.2024**
(21) Numéro de dépôt: 21794945.2
(22) Date de dépôt: 14.09.2021
(51) Int. Cl.: A01G 17/06, H05B 3/26, H05B 3/34, H05B 3/36, E04G 9/10, E04G 11/06, H05B 3/14, A01G 13/06

(54) **COFFRAGE CHAUFFANT/REFROIDISSANT POUR LA FABRICATION D'UN BÉTON COULÉ**
HEIZ-/KÜHLSCHALUNG ZUR HERSTELLUNG VON BETON
HEATING/COOLING FORMWORK FOR THE MANUFACTURE OF A POURED CONCRETE

(30) Priorité: 15.09.2020 CH 11632020; 07.06.2021 CH 6652021
(43) Date de publication de la demande: 26.07.2023
(73) Titulaire: Graphenaton Technologies SA, 1204 Genève (CH)
(72) Inventeur: MULLER, Patrick, 1296 Coppet (CH)
(74) Mandataire: Odoom, Ernest
(86) Numéro de dépôt international: PCT/IB2021/058355
(87) Numéro de publication internationale: WO 2022/058883

(56) Documents cités:
- CN-A- 110 913 515
- ES-A1- 2 537 400
- KR-A- 20160 009 712
- KR-B1- 101 834 508
- KR-U- 20070 000 560
- US-A1- 2015 069 647

## Description

La présente invention se rapporte à un coffrage chauffant/refroidissant pour la fabrication d'un corps en béton coulé sur place.

Afin d'accélérer la prise du béton, il existe des coffrages chauffants pour le coulage du béton dans le coffrage. Le coffrage chauffé permet de produire un corps de béton en tout temps, même en cas de gel.

Par ailleurs, pour construire un mur en béton, il est nécessaire de réaliser de nombreuses opérations afin de positionner correctement les banches de coffrage les unes par rapport aux autres, régler l'écartement entre des banches, les stabiliser au sol, régler leur alignement et leur aplomb, les solidariser ensemble, etc. L'ensemble de ces opérations doit être constamment sous contrôle pour éviter tout problème de qualité mais également pour limiter les risques pour la sécurité des opérateurs.

On connaît DE2061394 qui décrit un coffrage comprenant un élément de coffrage avec des fils de chauffage par résistance. Les fils de chauffage par résistance doivent également être transportés et assemblés avec l'élément de coffrage pendant le fonctionnement par temps chaud.

EP3259418 décrit un coffrage comprenant un élément de coffrage en cadre comportant une enveloppe de coffrage et une cassette chauffante disposée sur l'élément de coffrage en cadre, la cassette chauffante étant reliée de manière réversiblement détachable à l'élément de coffrage en cadre et possédant un dispositif de chauffage pour générer de la chaleur, la cassette chauffante possédant une première partie d'un dispositif de raccordement mécanique pour l'assemblage de la cassette chauffante sur l'élément de coffrage en cadre et l'élément de coffrage en cadre possédant une seconde partie du dispositif de raccordement mécanique, qui est raccordé à la première partie du dispositif de raccordement mécanique sur la cassette chauffante, la seconde partie du dispositif de raccordement mécanique possédant un évidement de passage de vis.

JP2008095434 décrit un coffrage et un chauffage électrique qui peut être détaché de ce coffrage en acier au moyen d'une connexion magnétique Le coffrage en acier peut donc être utilisé par temps chaud sans le chauffage électrique. En raison de la conception entièrement en forme de plaque du chauffage et de la connexion magnétique plate, le coffrage et son chauffage sont lourds et difficiles à transporter. KR20070000560 U divulgue un film chauffant pour sécher du béton dans une banche de coffrage.

Le but de la présente invention est donc de proposer un système de coffrage pour béton permettant de contrôler la température du béton, à la hausse comme à la baisse, tant dans les pays chauds que les pays froids et indépendamment de la saison.

Un autre but de la présente invention est de proposer un système de coffrage intégré et dont le poids et les manutentions sont maîtrisés à savoir un poids quasi-similaire à un système de coffrage conventionnel et des opérations de manutention identiques voire simplifiées par rapport à un système de coffrage tel que connu par l'état de la technique. Cet objectif et d'autres sont réalisés par une banche de coffrage selon la revendication 1.

Conformément à l'invention, une banche de coffrage pour la fabrication d'un corps en béton coulé sur place comprend une paroi comportant une face avant coffrante et agencée pour être en contact avec un béton et une face arrière opposée à la face avant. La banche de coffrage comporte un dispositif chauffant/refroidissant agencé sur la face avant coffrante. Le dispositif chauffant/refroidissant comporte de manière superposée, optionnellement un géotextile, un film chauffant/refroidissant apte à diffuser de la lumière infrarouge pour diffuser de la chaleur ou du froid.

Le géotextile peut éventuellement être remplacé par un autre matériau voire ne pas être présent. Le film comprend un élément chauffant/refroidissant plan comportant un connecteur relié électriquement à des pistes conductrices disposées sur ledit film reliable à un thermostat, ledit film recevant une encre conductrice déposée sur le film notamment par sérigraphie ou jet d'encre. Le film est apte à diffuser de la lumière infrarouge pour diffuser de la chaleur ou du froid sur le béton coulé. Le dispositif de chauffage comporte en outre un panneau réflecteur positionné entre le film et la face arrière.

De préférence, le film chauffant a une plage de température opérationnelle de 15°C à 80°C en chauffe.

Dans une forme d'exécution, l'encre conductrice est déposée sur le film par sérigraphie.

Le film reçoit une couche de résine dans des creusures formant des sillons recevant de l'encre recouverte d'une autre couche de résine. En général, les creusures sont créées par une gravure par technique laser au CO2 ou YAG. La qualité exceptionnelle du faisceau permet de réaliser des marquages nets et précis sur le film.

De préférence, l'encre est une encre à base de nanotubes de carbone, notamment du graphène.

Afin de garder un encombrement très limité, l'épaisseur du film est de 0,36mm. De la même manière, le panneau réflecteur est d'une épaisseur allant jusqu'à 0,6cm.

Dans une forme d'exécution, l'encre est une encre à base de nanotubes de carbone, notamment du graphène.

Le film peut être alimenté sous plusieurs tensions notamment en 12V, 24V, 48V, 110V ou 220V. Le film peut également être alimenté par une énergie solaire. Les puissances également sont variables.

Dans une forme d'exécution, le film comporte des capteurs et/ou des moyens de radio-identification, par exemple des capteurs de température permettant de mesurer la température à l'intérieur du coffrage et des moyens de radio-identification pour identifier à partir d'un poste de contrôle le positionnement et les informations transmises par chacun des capteurs présents sur chaque banche de coffrage.

Selon cette forme d'exécution, la banche de coffrage comprend un écran de visualisation monté dans la face arrière, l'écran de visualisation étant relié à un thermostat agencé pour réguler la température du film chauffant/refroidissant.

Dans une autre forme d'exécution et en particulier pour les pays chauds dans lesquelles un séchage trop rapide du béton fragilise la structure, la banche de coffrage comporte une sonde de Peltier pour abaisser la température à l'intérieur du coffrage constitué par un assemblage de banche jusqu'à quarante degrés Celsius.

Les caractéristiques de l'invention apparaitront plus clairement à la lecture de la description de plusieurs formes d'exécution données uniquement à titre d'exemple, nullement limitative en se référant aux figures schématiques, dans lesquelles :
- La figure 1 représente une vue en coupe d'une banche cde coffrage comportant un film chauffant/ rafraichissant en PET selon la présente invention ;
- La figure 2 représente une vue schématique d'un coffrage utilisant des banches de la figure 1 ; et
- Les figures 3A et 3B représentent une vue schématique d'un film chauffant/refroisissant selon la présente invention.

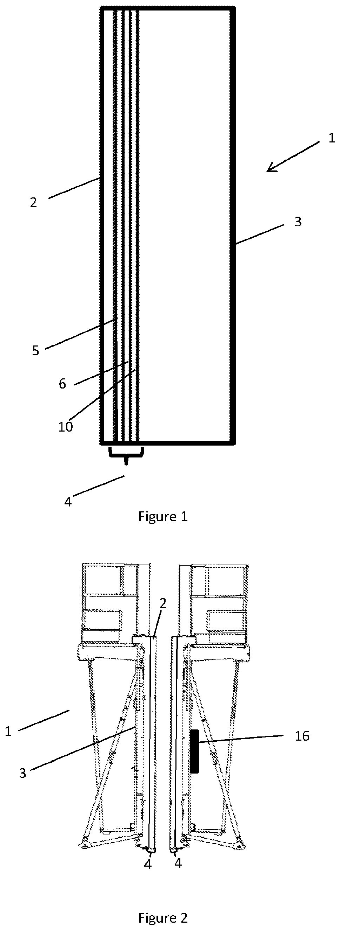

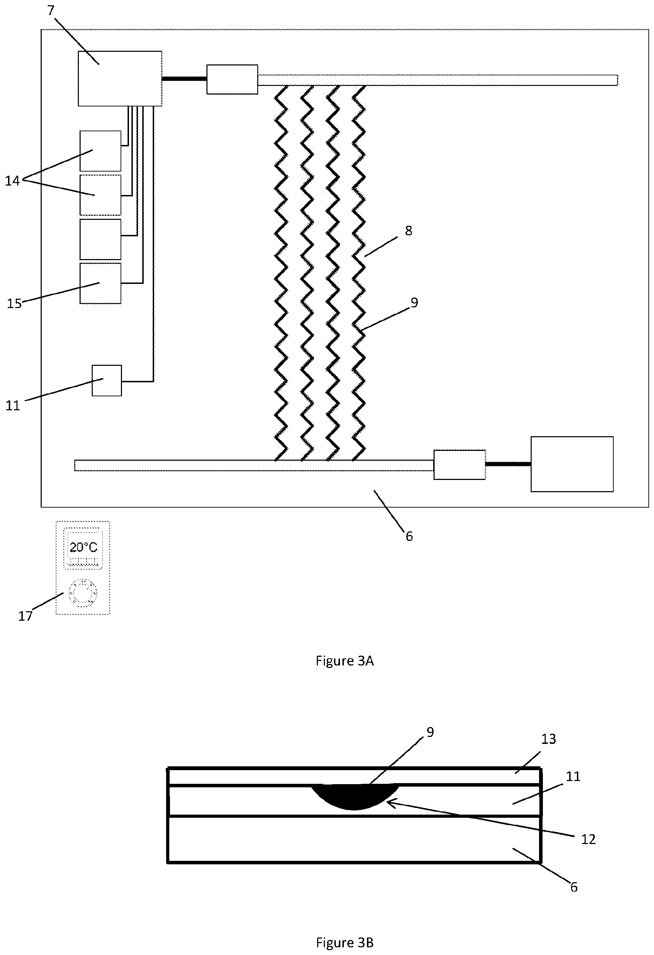

Comme illustré à la figure 1, une banche de coffrage 1 pour la fabrication d'un corps en béton coulé sur place, comprend une paroi comportant une face avant 2 coffrante et agencée pour être en contact avec un béton coulé et une face arrière 3 opposée à la face avant 2. La banche de coffrage 1 comporte un dispositif chauffant/refroidissant 4 agencé sur la face avant 2 coffrante. Le dispositif chauffant/refroidissant 4 comporte de manière superposée :
- Une couche géotextile 5 ;
- un film chauffant/refroidissant 6, d'une épaisseur de 0,36mm, apte à diffuser de la lumière infrarouge pour diffuser de la chaleur ou du froid, le film 6 comprenant un élément chauffant/refroidissant plan comportant un connecteur 7 (voir figure 3) relié électriquement à des pistes conductrices 8 (voir figure 3) disposées sur ledit film reliable à un thermostat 17 (voir figure 3), ledit film 6 recevant une encre conductrice 9 (voir figure 3) déposée sur le film 6 par sérigraphie, ledit film 6 étant apte à diffuser de la lumière infrarouge pour diffuser de la chaleur ou du froid sur le béton coulé ; et
- un panneau réflecteur 10 positionné entre le film 6 et la face arrière.

Dans cet exemple, la température maximale de chauffe du béton est de 80°. La montée en température est contrôlée grâce au thermostat et peut par exemple être limitée à 20° par heure afin d'éviter une mauvaise hydratation du ciment qui pourrait provoquer une fissuration mais surtout une baisse considérable de la résistance.

Sur un film souple en polymère, tel que du P.E.T, répondant aux exigences anti-feu et constituant une première couche du film 1, il est appliqué par gravure laser, une encre 9 (voir figure 3B) à base de nanotubes de carbone, du graphène, sur 7 microns.

Selon l'invention, en premier lieu, une résine 11 (voir figure 3B) est déposée sur ce film 6. Ensuite, cette résine est creusée de manière à former des sillions ou creusures 12 (voir figure 3B) dans lesquels est déposée une encre 9 par technique de sérigraphie.

Les sillons sont créés par une gravure par technique de laser à impulsion sur de très faibles épaisseurs. Une seconde couche de résine 13 (voir figure 3B) est déposée après l'intégration de l'encre 9 de manière à rendre étanche le film 6 et éviter l'utilisation d'un deuxième film pour rendre l'ensemble parfaitement étanche à l'eau. Dans cet exemple, l'épaisseur du film est de 360 microns mais peut être différent en fonction de l'utilisation.

Chaque film comporte des connecteurs pour relier électriquement un premier film avec un second film ou pour intégrer un composant électronique sur le film.

La connectique est simple, robuste pour un montage facile et permet d'éviter tout mauvais fonctionnement. La connectique est également conforme aux normes de sécurité en vigueur et de préférence n'est pas interchangeable pour éviter une mauvaise ou fausse réparation. Dans cet exemple, la connectique se fait avec des encres conductrices en nanotubes d'argent sur 2 microns.

Si dans cet exemple le matériau de support constituant le film 6 est une feuille en PET, d'autres feuilles polymères peuvent également être considérées, tout comme des feuilles comportant un dépôt métallisé réfléchissant dans le but de générer un chauffage/refroidissement directionnel.

Dans cet exemple, l'encre 9 est une encre à base de nanotubes de carbone, notamment du graphène.

Comme illustré à la figure 3A, le film chauffant comporte des capteurs 14 et des moyens de radio-identification 15.

Dans l'exemple illustré à la figure 2, un écran de visualisation 16 monté dans la face arrière, est relié à un thermostat 17 (voir figure 3A) agencé pour réguler la température du film chauffant/refroidissant.

Dans cet exemple, l'écran de visualisation 16 comporte un module électronique qui permet de générer une interface de contrôle pour interagir avec le thermostat et contrôler les valeurs des capteurs notamment grâce aux moyens de radio-identification et en particulier pour s'assurer que les températures de chauffe sont respectées ou que d'autres éléments liés au respect des règles de montage sont respectées.

Il est clair que l'invention ne se limite pas à un positionnement vertical des banches de coffrage pour réaliser des murs mais concerne également le positionnement horizontal pour la réalisation de dalles. L'invention concerne également des banches de formes non planes, par exemple arrondies.

L'invention concerne également des panneaux de coffrage non métalliques ou des banches ou panneaux de coffrage manuportables modulaires.

## Revendications

1. Banche de coffrage (1) pour la fabrication d'un corps en béton coulé sur place, la banche de coffrage (1) comprenant une paroi comportant une face avant (2) coffrante et agencée pour être en contact avec un béton et une face arrière (3) opposée à la face avant (2), la banche de coffrage (1) comportant un dispositif chauffant/refroidissant (4) agencé sur la face avant (2) coffrante, le dispositif chauffant/refroidissant (4) comportant de manière superposée :
- un film chauffant/refroidissant (6) apte à diffuser de la lumière infrarouge pour diffuser de la chaleur ou du froid, le film (6) comprenant un élément chauffant/refroidissant comportant un connecteur (7) relié électriquement à des pistes conductrices (8) disposées sur ledit film reliable à un thermostat (4), ledit film (6) étant apte à diffuser de la lumière infrarouge pour diffuser de la chaleur ou du froid sur le béton coulé au moyen de ladite banche de coffrage ; et
- un panneau réflecteur (10) positionné entre le film (6) et la face arrière (3) de la banche de coffrage, **caractérisé en ce que** lesdites pistes conductrices (8) sont formées par une pluralité de sillons (12) gravés par laser à impulsion dans une première couche de résine (11) déposée sur le film (6), lesdits sillons (12) recevant une encre conductrice (9) déposée sur le film par sérigraphie ou par jet d'encre et puis recouverts par une deuxième couche de résine (13).

2. Banche de coffrage selon la revendication 1, la banche de coffrage comportant une couche de géotextile (5).

3. Banche de coffrage selon l'une des revendications 1 ou 2, dans laquelle les sillons sont créés par laser CO2 ou YAG.

4. Banche de coffrage selon l'une des revendications précédentes, dans laquelle le film chauffant (6) a une plage de température opérationnelle de 15°C à 80°C en chauffe.

5. Banche de coffrage selon l'une des revendications précédentes, dans laquelle l'encre conductrice (9) est déposée sur le film (6) par sérigraphie.

6. Banche de coffrage selon l'une des revendications précédentes, dans laquelle ledit film (6) reçoit une couche de résine (11) dans des creusures (12) formant des sillons recevant de l'encre (9) recouverte d'une autre couche de résine (13).

7. Banche de coffrage selon l'une des revendications précédentes, dans laquelle l'encre (9) est une encre à base de nanotubes de carbone, notamment à base du graphène.

8. Banche de coffrage selon l'une des revendications précédentes, dont l'épaisseur dudit film (6) est de 0,36mm.

9. Banche de coffrage selon l'une des revendications précédentes, dans laquelle ledit film (6) est alimenté de 12V à 220V notamment par une énergie solaire.

10. Banche de coffrage selon l'une des revendications précédentes, dans laquelle le film chauffant/refroidissant (6) comporte des capteurs (14) et/ou des moyens de radio-identification (15).

11. Banche de coffrage selon la revendication 10, comprenant un écran de visualisation (16) monté dans la face arrière (3) de la banche de coffrage, l'écran de visualisation (16) étant relié à un thermostat (17) agencé pour réguler la température dudit film (6) chauffant/refroidissant.

12. Banche de coffrage selon l'une des revendications précédentes, comportant une sonde de Peltier (11) pour abaisser la température à l'intérieur du coffrage constitué par un assemblage de banches jusqu'à quarante degrés Celsius.

13. Banche de coffrage selon l'une des revendications précédentes, dans laquelle le panneau réflecteur (10) est d'une épaisseur allant jusqu'à 0,6cm.

## Patentansprüche

1. Verschalung (1) für die Herstellung eines vor Ort gegossenen Betonkörpers, wobei die Verschalung (1) eine Wand umfasst, die eine Verschalvorderseite (2), die für Kontakt mit Beton eingerichtet ist, und eine der Vorderseite (2) gegenüberliegende Rückseite (3) aufweist, wobei die Verschalung (1) eine an der Vorderseite (2) eingerichtete Heiz-/Kühlvorrichtung (4) aufweist, wobei die Heiz-/Kühlvorrichtung (4) überlagert aufweist:
- eine Heiz-/Kühlfolie (6), die geeignet ist, Infrarotlicht zu streuen, um Wärme oder Kälte zu verteilen, wobei die Folie (6) ein Heiz-/Kühlelement umfasst, das einen Verbinder (7) aufweist, der mit Leiterbahnen (8) elektrisch verbunden ist, die auf der Folie angeordnet sind, die mit einem Thermostat (4) verbindbar ist, wobei die Folie (6) geeignet ist, Infrarotlicht zu streuen, um Wärme oder Kälte auf den mittels der Verschalung gegossenen Beton zu verteilen; und
- eine reflektierende Platte (10), die zwischen der Folie (6) und der Rückseite (3) der Verschalung positioniert ist, **dadurch gekennzeichnet, dass** die Leiterbahnen (8) durch eine Vielzahl von Rillen (12) ausgebildet werden, die durch einen gepulsten Laser in einer ersten Harzschicht (11), die auf der Folie (6) abgeschieden ist, graviert werden, wobei die Rillen (12) eine leitfähige Tinte (9) aufnehmen, die durch Siebdruck oder durch Tintenstrahl auf die Folie abgeschieden und dann mit einer zweiten Harzschicht (13) bedeckt wird.

2. Verschalung nach Anspruch 1, wobei die Verschalung eine Geotextilschicht (5) aufweist.

3. Verschalung nach einem der Ansprüche 1 oder 2, wobei die Rillen durch einen CO2- oder YAG-Laser erzeugt werden.

4. Verschalung nach einem der vorstehenden Ansprüche, wobei die Heizfolie (6) bei Erhitzen einen Betriebstemperaturbereich von 15 °C bis 80 °C vorweist.

5. Verschalung nach einem der vorstehenden Ansprüche, wobei die leitfähige Tinte (9) durch Siebdruck auf der Folie (6) abgeschieden wird.

6. Verschalung nach einem der vorstehenden Ansprüche, wobei die Folie (6) eine Harzschicht (11) in Vertiefungen (12) aufnimmt, die Rillen ausbilden, die Tinte (9) aufnehmen, die mit einer weiteren Harzschicht (13) bedeckt wird.

7. Verschalung nach einem der vorstehenden Ansprüche, wobei die Tinte (9) eine Tinte auf Basis von Kohlenstoffnanoröhrchen, insbesondere auf Basis von Graphen, ist.

8. Verschalung nach einem der vorstehenden Ansprüche, wobei die Dicke der Folie (6) 0,36 mm beträgt.

9. Verschalung nach einem der vorstehenden Ansprüche, wobei die Folie (6) insbesondere durch Solarenergie mit 12 V bis 220 V versorgt wird.

10. Verschalung nach einem der vorstehenden Ansprüche, wobei die Heiz-/Kühlfolie (6) Funkerkennungssensoren (14) und/oder -mittel (15) aufweist.

11. Verschalung nach Anspruch 10, umfassend einen Anzeigebildschirm (16), der in der Rückseite (3) der Verschalung montiert ist, wobei der Anzeigebildschirm (16) mit einem Thermostat (17) verbunden ist, das eingerichtet ist, um die Temperatur der Heiz-/Kühlfolie (6) zu regulieren.

12. Verschalung nach einem der vorstehenden Ansprüche, umfassend eine Peltier-Sonde (11), um die Temperatur im Inneren der aus einer Anordnung von Verschalungselementen bestehenden Schalung auf bis zu vierzig Grad Celsius zu senken.

13. Verschalung nach einem der vorstehenden Ansprüche, wobei die reflektierende Platte (10) eine Dicke von bis zu 0,6 cm besitzt.

## Claims

1. A formwork panel (1) for the manufacture of a cast-in-place concrete body, the formwork panel (1) comprising a wall comprising a front shuttering face (2) and arranged to be in contact with a concrete and a rear face (3) opposite the front face (2), the formwork panel (1) comprising a heating/cooling device (4) arranged on the front shuttering face (2), the heating/cooling device (4) comprising, in a superimposed manner:
- a heating/cooling film (6) capable of diffusing infrared light to diffuse heat or cold, the film (6) comprising a heating/cooling element comprising a connector (7) electrically connected to conductive tracks (8) arranged on said film connectable to a thermostat (4), said film (6) being capable of diffusing infrared light to diffuse heat or cold onto concrete cast by means of said formwork panel; and
- a reflector panel (10) positioned between the film (6) and the rear face (3) of the formwork panel, **characterized in that** said conductive tracks (8) are formed by a plurality of grooves (12) etched by pulse laser into a first resin layer (11) deposited on the film (6), said grooves (12) receiving a conductive ink (9) deposited on the film by screen printing or ink jet and then covered by a second resin layer (13).

2. The formwork panel according to claim 1, the formwork panel comprising a layer of geotextile (5).

3. The formwork panel according to one of claims 1 or 2, wherein the grooves are created by CO2 or YAG laser.

4. The formwork panel according to one of the preceding claims, wherein the heating film (6) has an operational temperature range from 15°C to 80°C when heated.

5. The formwork panel according to one of the preceding claims, wherein the conductive ink (9) is deposited on the film (6) by screen printing.

6. The formwork panel according to one of the preceding claims, wherein said film (6) receives a layer of resin (11) in recesses (12) forming grooves receiving ink (9) covered by a further layer of resin (13).

7. The formwork panel according to one of the preceding claims, wherein the ink (9) is a carbon nanotube-based ink, in particular a graphene-based ink.

8. The formwork panel according to one of the preceding claims, wherein the thickness of said film (6) is 0.36 mm.

9. The formwork panel according to one of the preceding claims, wherein said film (6) is powered from 12 V to 220 V in particular by solar energy.

10. The formwork panel according to one of the preceding claims, wherein the heating/cooling film (6) comprises sensors (14) and/or radio identification means (15).

11. The formwork panel according to claim 10, comprising a display screen (16) mounted in the rear face (3) of the formwork panel, the display screen (16) being connected to a thermostat (17) arranged to regulate the temperature of said heating/cooling film (6).

12. The formwork panel according to one of the preceding claims, comprising a Peltier probe (11) for lowering the temperature inside the formwork made up of an assembly of panels by up to forty degrees Celsius.

13. The formwork panel according to one of the preceding claims, wherein the reflector panel (10) is up to 0.6 cm thick.
